# EUROPEAN PATENT APPLICATION

(11) **EP 2 528 390 A1**
(43) Date of publication of application: **28.11.2012**
(21) Application number: 11768412.6
(22) Date of filing: 08.04.2011
(51) Int. Cl.: H04W 40/02, H04W 40/12, H04W 40/20, H04W 28/06, H04W 84/00, H04L 12/56

(54) **NODE CHOICE METHOD, NETWORK DEVICE AND SYSTEM**

(30) Priority: 14.04.2010 CN 201010149983
(71) Applicant: Huawei Technologies Co., Ltd., Shenzhen, Guangdong 518129 (CN)
(72) Inventor: GU, Yingjie, Shenzhen, Guangdong 518129 (CN); ZONG, Ning, Shenzhen, Guangdong 518129 (CN); SONG, Haibin, Shenzhen, Guangdong 518129 (CN)
(74) Representative: Kreuz, Georg Maria
(86) International application number: PCT/CN2011/072529
(87) International publication number: WO 2011/127800

(57) **Abstract**

Embodiments of the present invention relate to the field of communications technologies, and disclose a peer selection method, network device, and system. The method includes: receiving a network resource download request sent by a requesting peer, where the request carries a peer identifier, and sending a peer identifier of the requesting peer and a peer identifier of a candidate peer to a server, so that the server queries a storage path cost of the candidate peer according to a preset network map and returns a query result, where the candidate peer owns a network resource requested by the requesting peer, and the storage path cost of the candidate peer refers to cost between a network storage of the candidate peer and the requesting peer; and receiving the query result returned by the server, and notifying the requesting peer of the query result. According to embodiments of the present invention, costs between a peer and network storages of other peers can be queried, and a network storage of the lowest cost can be further selected for downloading the network resource.

## Description

### FIELD OF THE INVENTION

The present invention relates to the field of communications technologies, and in particular, to a peer selection method, network device, and system in a P2P network.

### BACKGROUND OF THE INVENTION

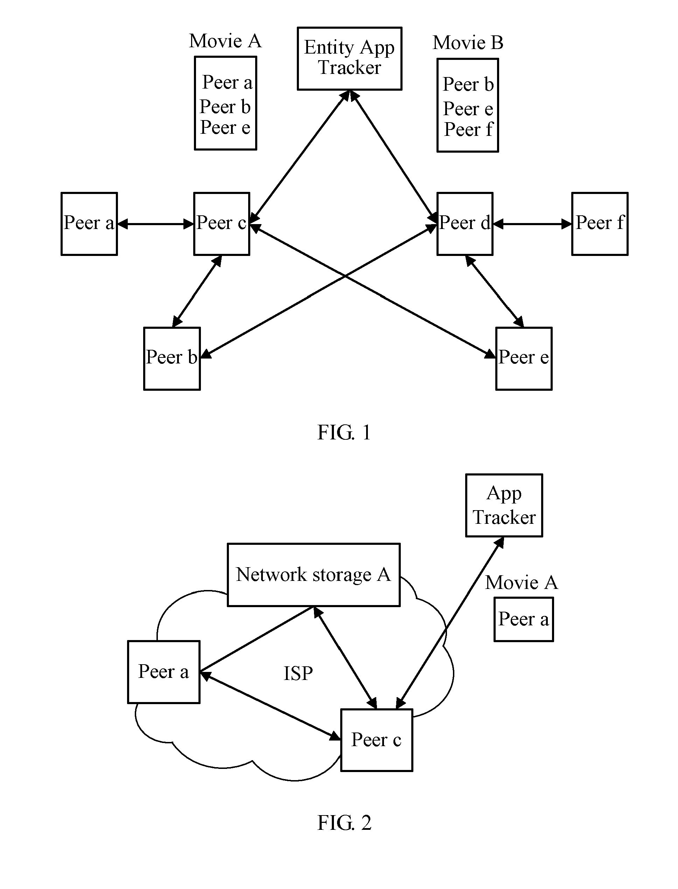

An important type of peer-to-peer (Peer-to-Peer, P2P) application is that an index server App Tracker is deployed in a P2P application and configured to store a list of peers (peers) sharing a network resource (for example, a movie or music). FIG. 1 is a schematic diagram of a P2P application based on an index server App Tracker. In FIG. 1, when peer c wants to download movie A, peer c first requests the index server App Tracker for a list of peers sharing movie A, and the index server App Tracker returns the peers sharing movie A, namely, peers a, b, and e, to peer c; and peer c requests peers a, b, and e for downloading movie A. Likewise, when peer d wants to download movie B, peer d first requests the index server App Tracker for a list of peers sharing movie B, and the index server App Tracker returns the peers sharing movie B, namely, peers b, e, and f, to peer d; and peer d requests peers b, e, and f for downloading movie B.

To optimize utilization of network resources of an Internet service provider (Internet Service Provider, ISP) by the P2P application, an application layer traffic optimization (Application layer transport optimization, ALTO) server is deployed in the ISP network and configured to provide the P2P application with basic network information, for example, network topology, link cost, ISP policy, and so on. The P2P application uses the basic network information provided by the ALTO server to set a P2P session, for example, selecting a source. Each ISP network is divided into multiple autonomous areas (PID). A network map stored on the ALTO server includes peer distribution (that is, which peers with Internet Protocol (Internet Protocol, IP) prefixes are included in each PID), network cost (that is, the communication cost between different PIDs, for example, the count of hops from one PID to another PID), or the order of network costs (that is, for a PID, the costs to other PIDs are arranged in descending order or ascending order). The ALTO server provides two solutions for traffic optimization. (1) The index server App Tracker downloads a network map from the ALTO server, and selects, according to the network map, a peer of the lowest cost for the peer to download a network resource. (2) Every time when the index server App Tracker receives a download request of a peer, the App Tracker finds a list of peers from which the requested resources can be downloaded, queries the ALTO server for the costs between each peer in the list of peers and the peer, selects a candidate peer of a low cost, and sends the candidate peer to the peer, so that the peer can download the network resource from the candidate peer.

Because, the download bit rate of a peer is far greater than the upload bit rate, one peer usually requires multiple serving peers to provide download services, which results in that the upload capability of the whole network is lower than the download capability, and affects fast publishing of network resources. To solve the problem that the upload capability of the network is lower than the download capability, a network storage is deployed in the network by the operator. The network storage uses a universal protocol and provides unified network storage capabilities. A peer stores a network resource owned by the peer on the network storage and publishes the network resource in the P2P mode. When other peer requests the peer for the network resource, the peer directs the other peer to this network storage to download the network resource, thereby increasing the download bit rate of the network resource. As shown in FIG. 2, peer a owns movie A, publishes information about movie A owned by pear a to the index server App Tracker, and uploads movie A to network storage A; when peer c requests the index server App Tracker for movie A, the index server App Tracker returns peer a to peer c; and peer c requests peer a for movie A, and peer a directs peer c to download the movie A from network storage A.

In practice, the inventor finds that, the costs between peers in the same PID are the same, but the network storage of each peer varies, so the costs for each peer to reach the network storage of another peer are definitely different. As the ALTO server can merely query the cost between peers and cannot query the cost between a peer and the network storage of other peer, the peer cannot download a network resource from a network storage of the lowest cost.

### SUMMARY OF THE INVENTION

The technical problem to be solved by embodiments of the present invention is to provide a peer selection method, network device and system, so that the costs between a peer and network storages of other peers can be queried, and a network storage of the lowest cost can be selected to download network resources.

To solve the technical problem above, embodiments of the present invention provide the following technical solutions.

A peer selection method includes:
receiving a network resource download request sent by a requesting peer, where the request carries a peer identifier;
sending a peer identifier of the requesting peer and a peer identifier of a candidate peer to a server, so that the server queries a storage path cost of the candidate peer according to a preset network map and returns a query result, where the candidate peer owns a network resource requested by the requesting peer, and the storage path cost of the candidate peer refers to cost between a network storage of the candidate peer and the requesting peer; and
receiving the query result returned by the server, and notifying the requesting peer of the query result.

A peer selection method includes:
obtaining a peer identifier of a requesting peer and a peer identifier of a candidate peer, where the candidate peer owns a network resource requested by the requesting peer; and
querying a storage path cost of the candidate peer according to a preset network map, and notifying the requesting peer of a query result,
where the storage path cost of the candidate peer refers to cost between a network storage of the candidate peer and the requesting peer.

A network device includes:
a first module, configured to receive a network resource download request sent by a requesting peer, where the request carries peer identifiers;
a second module, configured to send a peer identifier of the requesting peer and a peer identifier of a candidate peer to a server, so that the server queries a storage path cost of the candidate peer according to a preset network map and returns a query result, where the candidate peer owns a network resource requested by the requesting peer, and the storage path cost of the candidate peer refers to cost between a network storage of the candidate peer and the requesting peer; and
a third module, configured to receive the query result returned by the server, and notify the requesting peer of the query result.

A network device includes:
an obtaining module, configured to obtain a peer identifier of a requesting peer and a peer identifier of a candidate peer, where the candidate peer owns a network resource requested by the requesting peer; and
a querying module, configured to query a storage path cost of the candidate peer according to a preset network map, and notify the requesting peer of a query result, where the storage path cost of the candidate peer refers to cost between a network storage of the candidate peer and the requesting peer.

A peer selection system includes:
a requesting peer, configured to send a network resource download request carrying peer identifiers;
a network device, configured to receive the network resource download request, and send a peer identifier of the requesting peer and a peer identifier of a candidate peer to a server, where the candidate peer owns a network resource requested by the requesting peer; and
the server, configured to query a storage path cost of the candidate peer according to a preset network map, and return a query result, where the storage path cost of the candidate peer refers to cost between a network storage of the candidate peer and the requesting peer;
the network device is further configured to receive the query result, and notify the requesting peer of the query result.
Compared with the prior art, embodiments of the present invention have the following beneficial effects.

In the embodiments of the present invention, according to the preset network map, the server may query the cost between the network storage of the candidate peer that owns the network resource and the requesting peer, and return the query result; and the requesting peer is notified of the query result, so that the requesting peer can subsequently download the network resource from the network storage of the lowest cost.

### BRIEF DESCRIPTION OF THE DRAWINGS

To make the technical solutions of the embodiments of the present invention or the prior art clearer, the accompanying drawings used in the description of the embodiments or the prior art are briefly described hereunder. Evidently, the accompanying drawings illustrate only some exemplary embodiments of the present invention and persons of ordinary skill in the art can derive other drawings from these drawings without creative efforts.
FIG. 1 is a schematic diagram of a P2P application based on an App Tracker;
FIG. 2 is a schematic diagram of a network system in the prior art;
FIG. 3 is a flowchart of a peer selection method according to an embodiment of the present invention;
FIG. 4 is a flowchart of another peer selection method according to an embodiment of the present invention;
FIG. 5 is a flowchart of another peer selection method according to an embodiment of the present invention;
FIG. 6 is a flowchart of another peer selection method according to an embodiment of the present invention;
FIG. 7 is a flowchart of another peer selection method according to an embodiment of the present invention;
FIG. 8 is a structural diagram of a network device according to an embodiment of the present invention;
FIG. 9 is a structural diagram of another network device according to an embodiment of the present invention;
FIG. 10 is a structural diagram of a peer selection system according to an embodiment of the present invention; and
FIG. 11 is a structural diagram of another peer selection system according to an embodiment of the present invention.

### DETAILED DESCRIPTION OF THE EMBODIMENTS

The technical solutions of the embodiments of the present invention are hereinafter described clearly and completely with reference to the accompanying drawings. Apparently, the embodiments in the following descriptions are merely some exemplary embodiments of the present invention, rather than all embodiments of the present invention. All other embodiments, which can be derived by persons of ordinary skill in the art from the embodiments given herein without any creative effort, shall fall within the scope of the present invention.

### Embodiment 1

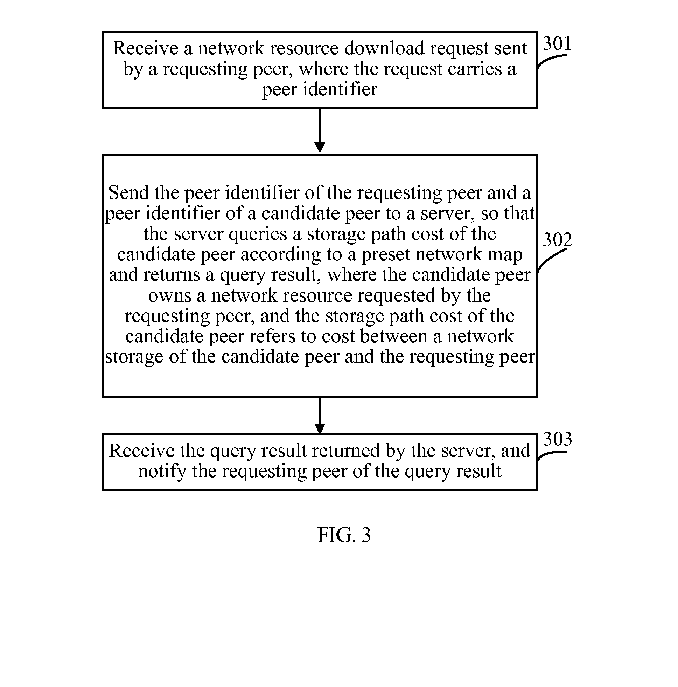

FIG. 3 is a flowchart of a peer selection method according to an embodiment of the present invention. As shown in FIG. 3, the method may include the following steps.
301: Receive a network resource download request sent by a requesting peer, where the request carries a peer identifier.

In the embodiment of the present invention, the involved network resources include, but are not limited to, movie, song, picture, and document.

Preferably, the network resource download request sent by the requesting peer may further carry an identifier for enabling a network storage, where the identifier is used to identify that the requesting peer supports the application of the network storage.
302: Send the peer identifier of the requesting peer and a peer identifier of a candidate peer to a server, so that the server queries a storage path cost of the candidate peer according to a preset network map and returns a query result, where the candidate peer owns a network resource requested by the requesting peer, and the storage path cost of the candidate peer refers to a cost between a network storage of the candidate peer and the requesting peer.

The query result includes a peer identifier of a candidate peer of the lowest storage path cost, or storage path costs of all candidate peers, or peer identifiers of candidate peers arranged in order of magnitude of the storage path costs.

For example, it is assumed that a peer with peer identifier B1 sends a request for downloading movie A, while three peers with peer identifiers B2, B3, and B4 own movie A; the cost between the network storage of the peer with peer identifier B2 and the peer with peer identifier B1 is 0.4; the cost between the network storage of the peer with peer identifier B3 and the peer with peer identifier B1 is 0.3; the cost between the network storage of the peer with peer identifier B4 and the peer with peer identifier B1 is 0.5. Therefore, the query result returned by the server may be the peer identifier B3, or may be the costs 04, 0.3, and 05, or may be the order of peer identifiers: B4, B2, and B3, or B3, B2, and B4.

In the embodiment of the present invention, the network map preset in the server includes, but is not limited to, costs between peers and costs between peers and network storages thereof. The costs between peers in the same PID are the same.

In the embodiment of the present invention, the identifier of the peer that owns the network resource may be obtained from a peer identifier swarm (swarm). Accordingly, in the embodiment of the present invention, before step 301, the peer identifier of the candidate peer that owns the network resource may be added to the peer identifier swarm (swarm).
303: Receive the query result returned by the server, and notify the requesting peer of the query result.

In Embodiment 1 of the present invention, according to the preset network map, the server may query the cost between the network storage of the candidate peer that owns the network resource and the requesting peer, and return the query result; and the requesting peer is notified of the query result, so that the requesting peer can download the network resource from the network storage of the lowest cost.

### Embodiment 2

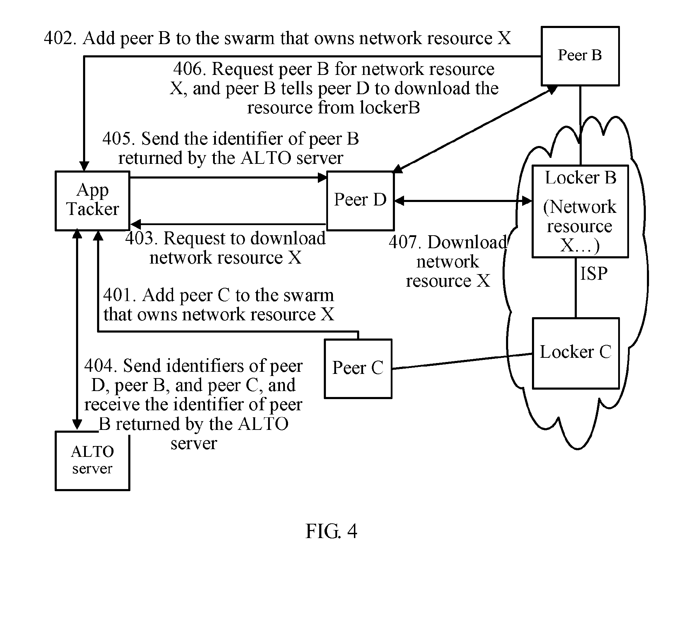

FIG. 4 is a flowchart of another peer selection method according to an embodiment of the present invention. In this embodiment, with an ATLO server as an example, the peer selection method provided by the embodiment of the present invention is described. As shown in FIG. 4, the method may include the following steps.
401: Peer C, whose network storage is Locker C, publishes network resource X to the App Tacker, and tells the App Tacker that peer C supports the application of the network storage; or the App Tacker adds peer C to the swarm that owns network resource X, and learns that peer C supports the application of the network storage by other means.
402: Peer B, whose network storage is Locker B, publishes network resource X to the App Tacker, and tells the App Tacker that peer B supports the application of the network storage; or the App Tacker adds peer B to the swarm that owns network resource X, and learns that peer B supports the application of the network storage by other means.

The sequence of steps 401 and 402 is not limited.
403: Peer D requests the App Tacker for downloading network resource X, and indicates, in the request, that peer D supports the application of the network storage.
404: The App Tacker learns, according to the swarm of network resource X, that both peer B and peer C own the network resource. The App Tacker sends identifiers of peer D, peer B, and peer C to the ALTO server. The ALTO server finds, according to the network map, that the Locker of peer B is closer to peer D, and tells the App Tacker about the query result.
405: The App Tacker tells peer D about the query result.
406: Peer D requests peer B for network resource X, and peer B tells peer D to download network resource X from lockerB.
407: Peer D downloads network resource X from LockerB.

In Embodiment 2 of the present invention, according to the preset network map, the ALTO server may query the cost between the network storage of the peer owning the network resource and peer D, and return the query result; and peer D is notified of the query result, so that peer D can subsequently download the network resource from the network storage of the lowest cost.

### Embodiment 3

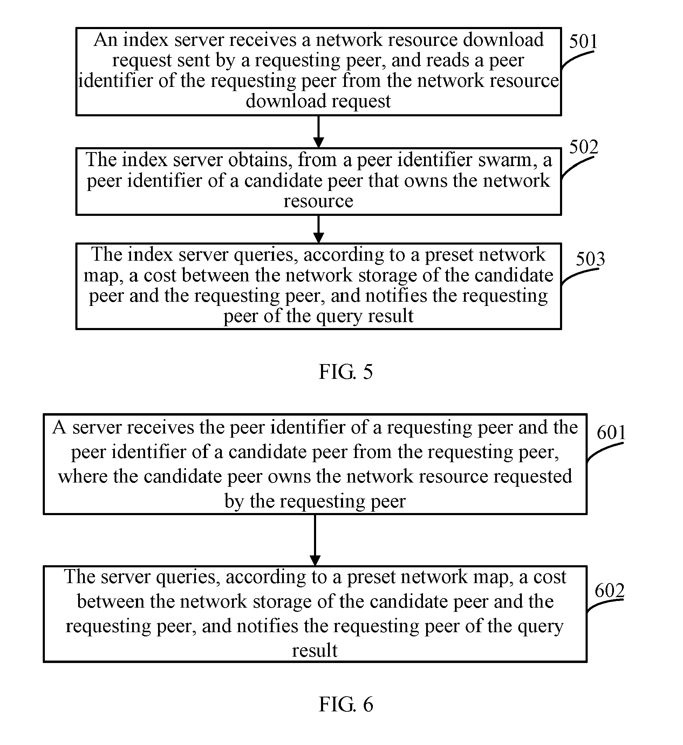

FIG. 5 is a flowchart of another peer selection method according to an embodiment of the present invention. As shown in FIG. 5, the method may include:
501: An index server receives a network resource download request sent by a requesting peer, and reads a peer identifier of the requesting peer from the network resource download request. Preferably, the network resource download request sent by the requesting peer may carry an identifier for enabling a network storage, where the identifier is used to identify that the requesting peer supports the application of the network storage.
502: The index server obtains, from a peer identifier swarm (swarm), a peer identifier of a candidate peer that owns the network resource.

Accordingly, in the embodiment of the present invention, before step 502, the peer identifier of the candidate peer that owns the network resource may be added to the peer identifier swarm (swarm). 503: The index server queries, according to a preset network map, cost between the network storage of the candidate peer and the requesting peer, and notifies the requesting peer of the query result.

In the embodiment of the present invention, the index server may download the network map from a third-party server and store the network map, where the network map includes, but is not limited to, costs between peers and costs between peers and network storages thereof. The costs between peers in the same PID are the same.

In Embodiment 3 of the present invention, according to the preset network map, the index server may query the cost between the network storage of the candidate peer that owns the network resource and the requesting peer, and notify the requesting peer of the query result, so that the requesting peer can subsequently download the network resource from the network storage of the lowest cost.

### Embodiment 4

FIG. 6 is a flowchart of another peer selection method according to an embodiment of the present invention. As shown in FIG. 6, the method may include the following the following steps.

601: A server receives a peer identifier of a requesting peer and a peer identifier of a candidate peer from the requesting peer, where the candidate peer owns the network resource requested by the requesting peer.

602: The server queries, according to a preset network map, cost between the network storage of the candidate peer and the requesting peer, and notifies the requesting peer of the query result.

In the embodiment of the present invention, the requesting peer may obtain, from a peer identifier swarm (swarm), the peer identifier of the candidate peer that owns the network resource.

In Embodiment 4 of the present invention, according to the preset network map, the server may query the cost between the network storage of the candidate peer that owns the network resource and the requesting peer, and notify the requesting peer of the query result, so that the requesting peer can subsequently download the network resource from the network storage of the lowest cost.

### Embodiment 5

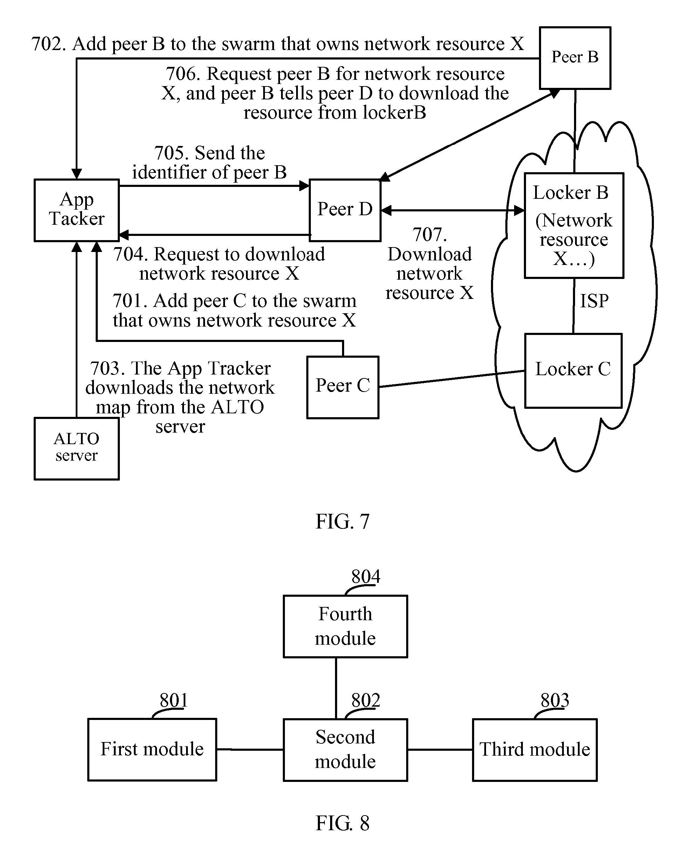

FIG. 7 is a flowchart of another peer selection method according to an embodiment of the present invention. As shown in FIG. 7, the method may include the following steps.

701: Peer C, whose network storage is LockerC, publishes network resource X to the App Tracker, and tells the App Tracker that peer C supports the application of the network storage; or the App Tracker adds peer C to the peer identifier swarm (swarm) that owns network resource X, and learns that peer C supports the application of the network storage by other means.

702: Peer B, whose network storage is LockerB, publishes network resource X to the App Tracker, and tells the App Tracker that peer B supports the application of the network storage; or the App Tracker adds peer B to the swarm that owns network resource X, and learns that peer B supports the application of the network storage by other means.

The sequence of steps 701 and 702 are not limited.

703: The App Tracker downloads the network map from the ALTO server and stores the network map.

704: Peer D requests the App Tracker for downloading network resource X, and indicates, in the request, that peer D supports the application of the network storage. The App Tracker learns, according to the swarm of network resource X, that both peer B and peer C own the network resource, and the App Tracker finds, according to the downloaded network map, that the Locker of peer B is closer to peer D.

705: The App Tracker notifies peer D of the query result.

706: Peer D requests peer B for network resource X, and peer B tells peer D to download network resource X from lockerB.

707. Peer D downloads network resource X from LockerB.

In Embodiment 5 of the present invention, the App Tracker may query, according to the network map downloaded from the ALTO server, the cost between the network storage of the peer owning the network resource and the peer sending the network resource download request, and notify the peer sending the network resource download request of the query result, so that the peer can subsequently download the network resource from the network storage of the lowest cost.

### Embodiment 6

FIG. 8 is a structural diagram of a network device according to an embodiment of the present invention, where the network device is used to implement the methods in the foregoing embodiments of the present invention. As shown in FIG. 8, the network device may include:
A first module 801 is configured to receive a network resource download request sent by a requesting peer, where the request carries a peer identifier.

Preferably, the network resource download request sent by the requesting peer may carry an identifier for enabling a network storage, where the identifier is used to identify that the requesting peer supports the application of the network storage.

A second module 802 is configured to send a peer identifier of the requesting peer and a peer identifier of a candidate peer to a server, so that the server queries a storage path cost of the candidate peer according to a preset network map and returns a query result, where the candidate peer owns the network resource requested by the requesting peer, and the storage path cost of the candidate peer refers to cost between a network storage of the candidate peer and the requesting peer.

In the embodiment of the present invention, the network map preset in the server includes, but is not limited to, costs between peers and costs between peers and network storages thereof. The costs between peers in the same PID are the same.

A third module 803 is configured to receive the query result returned by the server, and notify the requesting peer of the query result.

The query result includes a peer identifier of a candidate peer of the lowest storage path cost, or storage path costs of all candidate peers, or peer identifiers of candidate peers arranged in order of magnitude of the storage path costs.

A fourth module 804 is configured to obtain the peer identifier of the candidate peer from a peer identifier swarm (swarm) before the second module 802 sends the peer identifier of the requesting peer and the peer identifier of the candidate peer to the server.

In Embodiment 6 of the present invention, according to the preset network map, the server may query the cost between the network storage of the candidate peer and the requesting peer, and return the query result; and the requesting peer is notified of the query result, so that the requesting peer can subsequently download the network resource from the network storage of the lowest cost.

### Embodiment 7

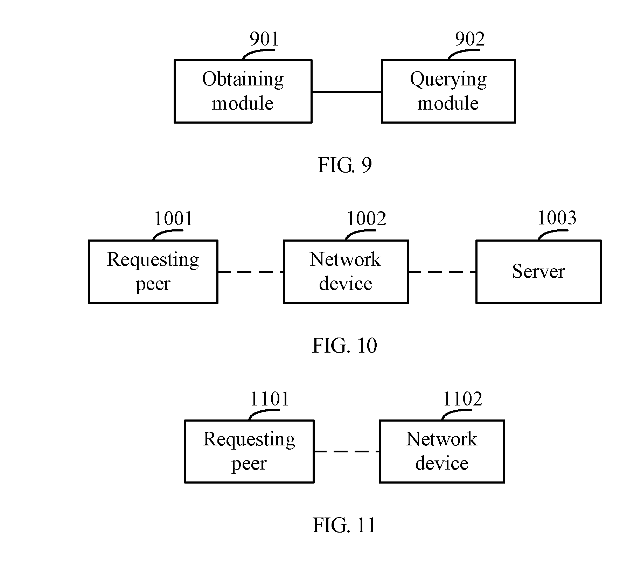

FIG. 9 is a structural diagram of another network device according to an embodiment of the present invention, where the network device is used to implement the methods in the foregoing embodiments of the present invention. As shown in FIG. 9, the network device may include:.

An obtaining module 901 is configured to obtain a peer identifier of a requesting peer and a peer identifier of a candidate peer, where the candidate peer owns a network resource requested by the requesting peer.

In the embodiment of the present invention, the obtaining module 901 may be configured to receive a network resource download request sent by the requesting peer, and read the peer identifier of the requesting peer from the network resource download request; and obtain, from a peer identifier swarm, the peer identifier of the candidate peer that owns the network resource; or specifically configured to receive, from the requesting peer, the peer identifier of the requesting peer and the peer identifier of the candidate peer that owns the network resource.

A querying module 902 is configured to query a storage path cost of the candidate peer according to a preset network map, and notify the requesting peer of a query result, where the storage path cost of the candidate peer refers to cost between a network storage of the candidate peer and the requesting peer.

In the embodiment of the present invention, the preset network map includes, but is not limited to, costs between peers and costs between peers and network storages thereof. The costs between peers in the same PID are the same.

The query result includes a peer identifier of a candidate peer of the lowest storage path cost, or storage path costs of all candidate peers, or peer identifiers of candidate peers arranged in order of magnitude of the storage path costs.

In Embodiment 7 of the present invention, according to the preset network map, the network device may query the cost between the network storage of the candidate peer that owns the network resource and the requesting peer, and notify the requesting peer of the query result, so that the requesting peer can subsequently download the network resource from the network storage of the lowest cost.

### Embodiment 8

FIG. 10 is a structural diagram of a peer selection system according to an embodiment of the present invention, where the system is used to implement the methods in the foregoing embodiments of the present invention. As shown in FIG. 10, the system may include: a requesting peer 1001, a network device 1002, and a server 1003.

The requesting peer 1001 is configured to send a network resource download request carrying a peer identifier to the network device 1002.

The network device 1002 is configured to receive the network resource download request carrying the peer identifier from the requesting peer 1001, and send the peer identifier of the requesting peer and a peer identifier of a candidate peer to the server 1003, where the candidate peer owns the network resource requested by the requesting peer 1001.

The server 1003 is configured to query a storage path cost of the candidate peer according to a preset network map, and return a query result to the network device 1002, where the storage path cost of the candidate peer refers to cost between a network storage of the candidate peer and the requesting peer 1001.

The network device 1002 is further configured to receive the query result returned by the server 1003 and notify the requesting peer 1001 of the query result.

In the embodiment of the present invention, the network map preset in the server 1003 includes, but is not limited to, costs between peers and costs between peers and network storages thereof. The costs between peers in the same PID are the same.

The query result includes a peer identifier of a candidate peer of the lowest storage path cost, or storage path costs of all candidate peers, or peer identifiers of candidate peers arranged in order of magnitude of the storage path costs.

In Embodiment 8 of the present invention, according to the preset network map, the server 1003 may query the cost between the network storage of the candidate peer that owns the network resource and the requesting peer, and return the query result; and the requesting peer is notified of the query result, so that the requesting peer can subsequently download the network resource from the network storage of the lowest cost.

### Embodiment 9

FIG. 11 is a structural diagram of another peer selection system according to an embodiment of the present invention, where the system is used to implement the methods in the foregoing embodiments of the present invention. As shown in FIG. 11, the system may include: a requesting peer 1101 and a network device 1102.

The requesting peer 1101 is configured to send a peer identifier of the requesting peer 1101 and a peer identifier of a candidate peer that owns a network resource to the network device 1102.

The network device 1102 is configured to receive the peer identifier of the requesting peer 1101 and the peer identifier of the candidate peer that owns the network resource from the peer 1101, query the cost between a network storage of the candidate peer and the requesting peer 1101 according to the preset network map, and notify the requesting peer 1101 of the query result.

In the embodiment of the present invention, the preset network map includes, but is not limited to, costs between peers and costs between peers and network storages thereof. The costs between peers in the same PID are the same.

The query result includes a peer identifier of a candidate peer of the lowest storage path cost, or storage path costs of all candidate peers, or peer identifiers of candidate peers arranged in order of magnitude of the storage path costs.

In Embodiment 9 of the present invention, according to the preset network map, the network device 1102 may query the cost between the network storage of the candidate peer that owns the network resource and the requesting peer, and notify the requesting peer of the query result, so that the requesting peer can subsequently download the network resource from the network storage of the lowest cost.

Persons of ordinary skill in the art may understand that all or part of the steps of the methods according to the embodiments may be implemented by a program instructing relevant hardware. The program may be stored in a computer readable storage medium, which may be a read only memory (ROM), a random access memory (RAM), a magnetic disk, or a compact disk.

The peer selection method, network device, and system provided by the embodiments of the present invention are described in detail above. The principle and implementation of the present invention are described herein with reference to exemplary embodiments, the embodiments are merely provided for ease of understanding of the method and core ideas of the present invention. Persons of ordinary skill in the art can make modifications to the present invention in terms of the specific implementations and application scopes according to the ideas of the present invention. Therefore, the specification shall not be construed as limitations to the present invention.

## Claims

1. A peer selection method, comprising:
receiving a network resource download request sent by a requesting peer, wherein the request carries a peer identifier;
sending a peer identifier of the requesting peer and a peer identifier of a candidate peer to a server, so that the server queries a storage path cost of the candidate peer according to a preset network map and returns a query result, wherein the candidate peer owns a network resource requested by the requesting peer, and the storage path cost of the candidate peer refers to cost between a network storage of the candidate peer and the requesting peer; and
receiving the query result returned by the server, and notifying the requesting peer of the query result.

2. The method according to claim 1, wherein the query result comprises a peer identifier of a candidate peer of a lowest storage path cost, or storage path costs of all candidate peers, or peer identifiers of candidate peers arranged in order of magnitude of the storage path costs.

3. The method according to claim 1 or 2, before sending the peer identifier of the requesting peer and the peer identifier of the candidate peer to the server, further comprising:
obtaining the peer identifier of the candidate peer from a peer identifier swarm.

4. A peer selection method, comprising:
obtaining a peer identifier of a requesting peer and a peer identifier of a candidate peer, wherein the candidate peer owns a network resource requested by the requesting peer; and
querying a storage path cost of the candidate peer according to a preset network map, and notifying the requesting peer of a query result;
wherein the storage path cost of the candidate peer refers to cost between a network storage of the candidate peer and the requesting peer.

5. The method according to claim 4, wherein the query result comprises a peer identifier of a candidate peer of a lowest storage path cost, or storage path costs of all candidate peers, or peer identifiers of candidate peers arranged in order of magnitude of the storage path costs.

6. The method according to claim 4 or 5, wherein the step of obtaining the peer identifier of the requesting peer and the peer identifier of the candidate peer comprises:
receiving a network resource download request sent by the requesting peer, and obtaining the peer identifier of the requesting peer from the network resource download request; and
obtaining the peer identifier of the candidate peer from a peer identifier swarm.

7. The method according to claim 4 or 5, wherein the step of obtaining the peer identifier of the requesting peer and the peer identifier of the candidate peer comprises:
receiving the peer identifier of the requesting peer and the peer identifier of the candidate peer sent by the requesting peer.

8. A network device, comprising:
a first module, configured to receive a network resource download request sent by a requesting peer, wherein the request carries a peer identifier;
a second module, configured to send a peer identifier of the requesting peer and a peer identifier of a candidate peer to a server, so that the server queries a storage path cost of the candidate peer according to a preset network map and returns a query result, wherein the candidate peer owns a network resource requested by the requesting peer, and the storage path cost of the candidate peer refers to cost between a network storage of the candidate peer and the requesting peer; and
a third module, configured to receive the query result returned by the server, and notify the requesting peer of the query result.

9. The network device according to claim 8, wherein the query result comprises a peer identifier of a candidate peer of a lowest storage path cost, or storage path costs of all candidate peers, or peer identifiers of candidate peers arranged in order of magnitude of the storage path costs.

10. The network device according to claim 8 or 9, further comprising:
a fourth module, configured to obtain the peer identifier of the candidate peer from a peer identifier swarm before the second module sends the peer identifier of the requesting peer and the peer identifier of the candidate peer to the server.

11. A network device, comprising:
an obtaining module, configured to obtain a peer identifier of a requesting peer and a peer identifier of a candidate peer, wherein the candidate peer owns a network resource requested by the requesting peer; and
a querying module, configured to query a storage path cost of the candidate peer according to a preset network map, and notify the requesting peer of a query result, wherein the storage path cost of the candidate peer refers to cost between a network storage of the candidate peer and the requesting peer.

12. The network device according to claim 11, wherein the query result comprises a peer identifier of a candidate peer of a lowest storage path cost, or storage path costs of all candidate peers, or peer identifiers of candidate peers arranged in order of magnitude of the storage path costs.

13. The network device according to claim 11 or 12, wherein the obtaining module is specifically configured to receive a network resource download request sent by the requesting peer, and obtain the peer identifier of the requesting peer from the network resource download request; and obtain the peer identifier of the candidate peer from a peer identifier swarm.

14. The network device according to claim 11 or 12, wherein the obtaining module is specifically configured to receive the peer identifier of the requesting peer and the peer identifier of the candidate peer sent by the requesting peer.

15. A peer selection system, comprising a requesting peer, a network device, and a server;
wherein:
the requesting peer is configured to send a network resource download request carrying a peer identifier;
the network device is configured to receive the network resource download request, and send a peer identifier of the requesting peer and a peer identifier of a candidate peer to the server, wherein the candidate peer owns a network resource requested by the requesting peer; and
the server is configured to query a storage path cost of the candidate peer according to a preset network map, and return a query result, wherein the storage path cost of the candidate peer refers to cost between a network storage of the candidate peer and the requesting peer; and
the network device is further configured to receive the query result, and notify the requesting peer of the query result.

16. The peer selection system according to claim 15, wherein the query result comprises a peer identifier of a candidate peer of a lowest storage path cost, or storage path costs of all candidate peers, or peer identifiers of candidate peers arranged in order of magnitude of the storage path costs.
